# EUROPEAN PATENT APPLICATION

(11) **EP 2 348 404 A1**
(43) Date of publication of application: **27.07.2011**
(21) Application number: 09306337.8
(22) Date of filing: 29.12.2009
(51) Int. Cl.: G06F 9/445, G06F 13/10

(54) **Naming of peripheral devices connected to a computer system bus**

(71) Applicant: Gemalto SA, 92190 Meudon (FR)
(72) Inventor: Lussetti, Jean, 13012, Marseille (FR)

(57) **Abstract**

Method for attributing a name to a peripheral device (SCR1) connected to a shared data communication bus of a computer (1), comprising the steps of:
-an access management driver (14) of said peripheral device retrieves the identification of the physical location of said device;
-said access management driver (14) checks whether said identification of the physical location is stored in a dedicated memory area (15); and
-if said identification is stored in said dedicated memory area, the driver (14) retrieves from the dedicated memory area (15) a logical name (SRIO) attributed to said device and provides this logical name to an access management application (11);
-if said identification is not stored in said dedicated memory area, the driver (14) attributes a logical name to said device, stores this logical name and the associated identification in said dedicated memory area (15) and provides this logical name.

## Description

The present invention relates to the identification of peripheral devices by the operating system of a computer, and more particularly to the identification of several peripheral devices connected to one or more communication buses of the computer by one application run on that system.

Commonly, a desktop or a laptop personal computer (PC) is provided with one or more Universal Serial Bus (USB) ports. Using several ports or an external USB hub, several USB devices can be connected to the computer and can communicate with its processor through the USB bus.

The operating systems usually run on a computer are designed to attribute a single name to each of the devices. Thanks to this single name, applications run on the computer are adapted to identify each USB peripheral and to display the name attributed to each USB device for the user. Thanks to this display, the user can select a given USB peripheral and access to its available content.

For instance, with the Windows XP™ operating system, the naming of the different smart card readers connected to the USB bus is carried out as follows. This operating system includes a software layer named "USB Driver stack", identifying all the USB peripherals connected to the USB root hubs of the computer. Another software layer named "PC/SC smart card reader driver" attributes randomly a distinct name to each smartcard reader connected to the USB bus. The name usually contains a root comprising several letters (usually identifying the smartcard reader model) followed by a number. For instance, three similar smartcard readers could be named "GTO Smart Card Reader 0", "GTO Smart Card Reader 1" and "GTO Smart Card Reader 2". The names attributed to the smartcard readers are provided to any PC/SC compliant application. Any PC/SC application can then display the available smartcard readers to provide an access to the user. Therefore, the PC/SC application creates a smartcard reader interface for each device having an attributed name.

In practice, this naming process suffers from several drawbacks. At each boot of the computer, the OS is launched and the names are attributed anew in a non deterministic way to all the smartcard readers even if no connection change was carried out. When several smartcard readers are connected to the USB bus, the user is unable to associate a connected smartcard reader with its name displayed by the PC/SC application. A given smartcard reader becomes even harder to identify if several smartcard readers are similar and if an important number of smartcard readers are connected to the computer. This is notably the case at the personalization stage of a smartcard manufacturing process. At that stage, tens of smartcard readers of the same kind can be connected to one PC. These smartcard readers are loaded with smartcards to be personalized. Associating a smartcard reader with its attributed name then becomes a very tedious burden. The name attribution is even less predictable if the USB connections are modified during or before the boot of the computer. For instance, using two smartcard readers A and B:

For a first boot, reader A is connected and reader B is connected afterwards. Reader A could be named 'GTO Smart Card Reader 0', whereas reader B could be named 'GTO Smart Card Reader 1'. For a second boot, reader B is connected and reader A is connected afterwards. Reader A could be named 'GTO Smart Card Reader 1', whereas reader B could be named 'GTO Smart Card Reader 0'. For the PC/SC application, the smartcard readers were exchanged, though they are in fact connected exactly at the same place.

Similar problems are faced with other kinds of buses shared by peripheral devices, or by other kinds of peripheral devices.

It is therefore an object of the present invention to provide a method for attributing a name to a peripheral device connected to a shared data communication bus of a computer, said name being accessible for an access management application executed in the environment of an operating system run by said computer, comprising the steps of:
- after the connection of said peripheral device or a boot of the computer , an access management driver of said peripheral device for said shared data communication bus retrieves the identification of the physical location of said peripheral device;
- said access management driver checks whether said identification of the physical location of said peripheral device is stored in a dedicated memory area; and
- if said identification of the physical location is stored in said dedicated memory area, the access management driver retrieves from the dedicated memory area a logical name attributed to said peripheral device and provides this logical name to said access management application ;
- if said identification of the physical location is not stored in said dedicated memory area, the access management driver attributes a logical name to said peripheral device, stores this logical name and the associated identification of the physical location in said dedicated memory area and provides this logical name to said access management application.

The logical name may be provided to an access management application dedicated to the type of said peripheral device.

Said access management application may be dedicated for the management of smartcard readers.

Said access management driver may be dedicated to peripheral devices connected to a USB bus of the computer.

Said dedicated memory area may be stored in the registry of the operating system run by said computer.

The access management driver may retrieve said identification of the physical location by issuing a query to the operating system run on said computer.

A hash of the identification of the physical connection tree of the peripheral device may be stored in the dedicated memory area as the identification of the physical location.

The access management application may display a logical access interface to said peripheral device including the logical name provided by said access management driver.

The invention also relates to an access management driver such that:
- it is adapted to retrieve the identification of the physical location of a peripheral device whose access is managed by the driver, said location being the location of the peripheral device on a shared data communication bus of a computer running said driver;
- it is adapted to check whether the retrieved identification is stored in a dedicated memory area; and
- if said identification is stored in the dedicated memory area, to retrieve a logical name attributed to said peripheral device and to provide it to an application for the management of the access to the peripheral devices connected to the bus;
- if said identification is not stored in the dedicated memory area, to attribute a logical name to said peripheral device, to store said logical name in the dedicated memory area in association with an identification of the physical location of the peripheral device and to provide said logical name to said access management application.

The advantage of the present invention will become apparent from the following description of several embodiments with reference to the accompanying drawings, in which:
- Figure 1 is a schematic view of a personal computer connected to a plurality of smartcard readers through a USB interface; and
- Figure 2 illustrates a name attribution process to a peripheral device further to the device connection or a computer boot.

In the remainder of the description, a shared data communication bus will define a data communication bus through which a plurality of peripheral devices can be connected to a computer.

According to the invention, after a boot of the computer or the connection of a peripheral device to a shared data communication bus, an access management driver of the peripheral device retrieves the identification of the physical location of the peripheral device from the operating system. The access management driver checks whether the identification of the physical location of the peripheral device is stored in a dedicated memory area. If the identification is stored in the dedicated memory area, the access management driver retrieves from the dedicated memory area a logical name attributed to the peripheral device and provides this logical name to the access management application. If the identification is not stored in the dedicated memory area, the access management driver attributes a logical name to the peripheral device, stores this logical name and the associated identification of the physical location in the dedicated memory area and provides this logical name to the access management application.

Thus, the naming of the peripheral devices is not lost when the computer is booted or when a device is unplugged. The naming is also insensitive to the plugging order. Moreover, such a naming does not necessarily require a peripheral device to have a serial number to carry out a persistent naming. The invention is particularly useful in a context where a number of similar smartcard readers are connected to the computer, which happens at a personalization stage of a smartcard manufacturing process. The invention is also suitable to be executed on USB composite devices, which is not the case in alternate solutions like relying on serial numbers.

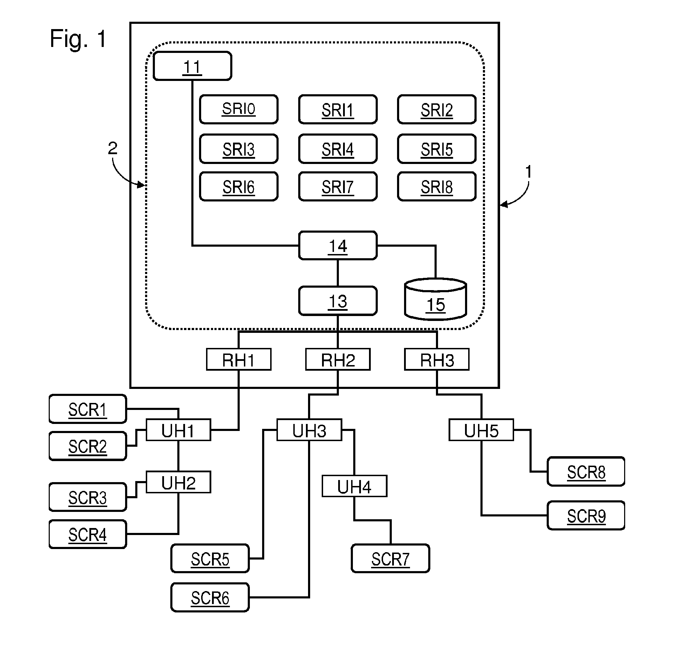

Figure 1 is a schematic view of a personal computer 1. The computer runs an operating system. The environment of the operating system allows applications to be executed on the computer in order to access to the various devices which are available. The computer comprises USB root hubs, RH1, RH2 and RH3. The USB root hubs are connected to the USB bus of the computer 1 and provide an access to this bus for external peripheral devices.

In the example of figure 1, various smartcard readers SCR1 to SCR9 are connected to the root hubs RH1, RH2 and RH3. In this example, external USB hubs UH1 to UH5 are connected directly or indirectly to the root hubs RH1, RH2 and RH3. The external USB hubs UH1 to UH5 allow the user to connect an important number of USB peripheral devices at appropriate locations.

The computer 1 executes a software layer 2, comprising the operating system. The software layer 2 comprises a USB management unit 13. This USB management unit 13 can be a component of the operating system. The USB management unit 13 is notably known as the 'USB Driver Stack' in the Microsoft ™ operating systems managing the USB bus (refer to http://msdn.microsoft.com/en-us/library/ms793558.aspx for more information or latest Windows Driver Kit).

In the example of Figure 1, the smartcard reader management application 11 displays logical interfaces SRI0 to SRI8 corresponding to respective smartcard readers SCR1 to SCR9. Each logical interface has a unique name allowing the user or the application to distinguish it from the other logical interfaces. Through the logical interfaces SRI0 to SRI8, the smartcard reader management application 11 can propose several kinds of actions or accesses to the content of the smartcards connected to readers SCR1 to SCR9. Alternate applications may not display the logical interfaces to the users. Such application can be automated tools for instance. Such applications just have to retrieve the unique name to perform their operation, based on the guarantee that a given name refers to a given device.

The software layer 2 also comprises a smartcard reader driver 14 that can be provided with the smartcard readers SCR1 to SCR9. Once the driver is installed on the computer 1, it is available for the access to all the smartcard readers connected afterwards. The smartcard reader driver 14 is adapted for obtaining the physical location of each of the smartcard readers SCR1 to SCR9. For instance, the smartcard reader driver 14 can obtain the identification of the physical location of each smartcard reader from the USB connection trees established by the USB management unit 13. The smartcard reader driver 14 can notably obtain the connection tree of each connected smartcard thanks to a "Device instance ID" query in the Windows ™ operating systems. A connection tree is usually provided as an alphanumeric string of characters coding the location of the peripheral device. A connection tree can notably have the following form:
USB\VID_08E6&PID_3437\6&14132D9&0&3

Where 'USB\' identifies the USB bus, 'VID_08E6&PID _3437\' identifies the peripheral device and '6&14132D9&0&3' identifies the location on the USB bus.

Thus, a given peripheral device connected at the same USB port will always be attributed the same connection tree by the operating system. The smartcard reader driver 14 can provide the connection tree to the smartcard reader management application 11.

The smartcard reader driver 14 is adapted to consult or update a dedicated memory area 15 for determining if a smartcard reader at a given location was already connected to the computer 1. This dedicated memory area 15 stores a set of connection trees (physical location identifications) for the smartcard readers connected before the last boot or before the connection of a smartcard to identify. Rather than storing the full name of each connection tree, only a hash of each connection tree can be stored in the dedicated memory area 15. Each connection tree is associated with a smartcard reader name to be displayed or to be used with the logical interface (logical identification). Under a Windows ™ environment, the dedicated memory area 15 can be stored in the registry. The dedicated memory area 15 can also be embodied as a database, a table or as a list. The dedicated memory area is stored in a persistent memory of the computer.

Making use of this dedicated memory area 15, the smartcard reader driver 14 guarantees that a smartcard reader will keep its name and logical interface in the application 11 when the computer 1 is booted or when the smartcard reader is unplugged and plugged again to the computer 1.

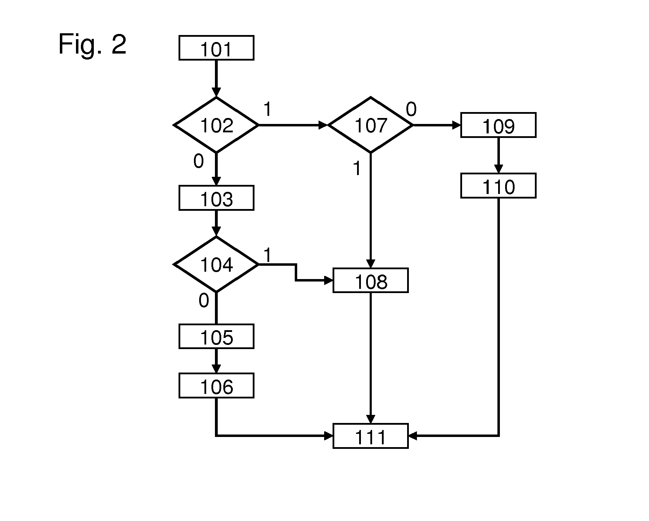

Figure 2 is a logical diagram illustrating a naming process according to an embodiment of the invention.

At step 101, a smartcard reader is connected to a USB port or the computer is booted. If the computer is booted, the naming process is executed for each of the smartcard devices already connected to a USB port.

At step 102, the smartcard reader driver 14 advantageously and optionally checks whether the connected smartcard reader has a serial number. If the smartcard reader does not have a serial number, the process proceeds to step 103.

At step 103, the smartcard reader driver 14 obtains the USB physical connection tree for the smartcard reader. The USB physical tree is provided by a software component of the operating system.

At step 104, the smartcard reader driver 14 checks whether the obtained connection tree is already registered in the dedicated memory area 15.

If the connection tree is not already registered in the dedicated memory area 15, the process proceeds to step 105. At step 105, the smartcard reader driver 14 generates a new instance name. At step 106, the smartcard reader driver 14 attributes this instance name to the smartcard reader by registering it in the dedicated memory area 15 in association with the connection tree of the smartcard reader. Then the process proceeds to step 111. The smartcard reader driver 14 attributes a distinct instance name to each connection tree.

At step 111, a logical interface for the smartcard reader is displayed by a dedicated application managing the accesses to the smartcard readers. The logical interface displays the instance name recovered or created for the smartcard reader.

At step 104, if the connection tree is already registered in the dedicated memory area 15, the smartcard reader has already been connected to the computer. The process proceeds to step 108.

At step 108, a previously used instance name is obtained from the dedicated memory area 15 and associated to the smartcard reader. The process then proceeds to the previously described step 111.

If the smartcard reader has a serial number and the application relies on the physical location, then the smartcard reader driver 14 may check at step 107 whether this serial number is already registered in the dedicated memory area 15.

If the serial number is already registered in the dedicated memory area 15, the smartcard reader has already been connected to the computer. The process is resumed at the previously described step 108. Otherwise, the process proceeds to step 109.

At step 109, the smartcard reader driver 14 generates a new instance name. At step 110, the smartcard reader driver 14 attributes this instance name to the smartcard reader by registering it in the dedicated memory area 15 in association with the serial number. Then the process proceeds to the previously described step 111.

If a smartcard reader is connected at a physical location where another smartcard reader was previously connected, the instance name of the previous reader can be used. Otherwise, the instance name can be updated to differently identify the newly connected smartcard reader in the application 11.

Though the invention was highlighted with the specific example of a USB bus, the invention also applies to any other shared data communication buses. The invention notably applies to IEEE 1394 compliant buses, PCI (for Peripheral Component Interconnect) buses or ATA (Advanced Technology Attachment) buses.

Though the invention was disclosed with the specific example of smartcard readers, the invention also applies to any other devices connectable on such an interface, like external hard drives, webcams, audio or video cards... Software layers with functions similar to the PC/SC according to the previous example can be designed for these devices.

## Claims

1. Method for attributing a name to a peripheral device (SCR1) connected to a shared data communication bus of a computer (1), said name being accessible for an access management application (11) executed in the environment of an operating system run by said computer (1), comprising the steps of:
- after the connection of said peripheral device or a boot of the computer (1) (SCR1), an access management driver (14) of said peripheral device for said shared data communication bus retrieves the identification of the physical location of said peripheral device;
- said access management driver (14) checks whether said identification of the physical location of said peripheral device is stored in a dedicated memory area (15); and
- if said identification of the physical location is stored in said dedicated memory area, the access management driver (14) retrieves from the dedicated memory area (15) a logical name (SRI0) attributed to said peripheral device and provides this logical name to said access management application (11);
- if said identification of the physical location is not stored in said dedicated memory area, the access management driver (14) attributes a logical name to said peripheral device, stores this logical name and the associated identification of the physical location in said dedicated memory area (15) and provides this logical name to said access management application (11).

2. Method according to claim 1, wherein the logical name is provided to an access management application (11) dedicated to the type of said peripheral device (SCR1).

3. Method according to claim 2, wherein said access management application (11) is dedicated for the management of smartcard readers.

4. Method according to any one of the preceding claims, wherein said access management driver (14) is dedicated to peripheral devices connected to a USB bus of the computer (1).

5. Method according to any one of the preceding claims, wherein said dedicated memory area (15) is stored in the registry of the operating system run by said computer (1).

6. Method according to any one of the preceding claims, wherein the access management driver (14) retrieves said identification of the physical location by issuing a query to the operating system run on said computer.

7. Method according to any one of the preceding claims, wherein a hash of the identification of the physical connection tree of the peripheral device is stored in said dedicated memory area as the identification of the physical location (15).

8. Method according to any one of the preceding claims, wherein the access management application (11) displays a logical access interface to said peripheral device (SCR1) including the logical name provided by said access management driver (14).

9. Access management driver (14), **characterized in that**:
- it is adapted to retrieve the identification of the physical location of a peripheral device whose access is managed by the driver (14), said location being the location of the peripheral device on a shared data communication bus of a computer running said driver;
- it is adapted to check whether the retrieved identification is stored in a dedicated memory area; and
- if said identification is stored in the dedicated memory area, to retrieve a logical name attributed to said peripheral device and to provide it to an application for the management of the access to the peripheral devices connected to the bus;
- if said identification is not stored in the dedicated memory area, to attribute a logical name to said peripheral device, to store said logical name in the dedicated memory area in association with an identification of the physical location of the peripheral device and to provide said logical name to said access management application.
